# EUROPEAN PATENT APPLICATION

(11) **EP 4 796 953 A1**
(43) Date of publication of application: **26.08.2026**
(21) Application number: 24888840.6
(22) Date of filing: 11.11.2024
(51) Int. Cl.: G01S 13/56, G01V 3/12

(54) **DETECTION DEVICE, DETECTION METHOD, AND VEHICLE**

(30) Priority: 09.11.2023 JP 2023191753
(71) Applicant: Minebea Mitsumi Inc., Kitasaku-gun, Nagano 3890293 (JP)
(72) Inventor: HAYASHI, Yugo, Tama-shi, Tokyo 206-8567 (JP)
(74) Representative: Wunderlich & Heim Patentanwälte PartG mbB
(86) International application number: PCT/JP2024/040040
(87) International publication number: WO 2025/100549

(57) **Abstract**

A detection device 1 has a first transmitting antenna 31 and a second transmitting antenna 32 for transmitting radio waves, and a first receiving antenna 41 and a second receiving antenna 42 for receiving reflected waves generated when the radio waves are reflected by an object. The detection device 1 is arranged in the passenger compartment 100 so that a first imaginary straight line L1 connecting the first transmitting antenna 31 and the second transmitting antenna 32 intersects with a second imaginary straight line L2 connecting the first receiving antenna 41 and the second receiving antenna 42 and at least one of the first imaginary straight line L1 and the second imaginary straight line L2 is inclined with respect to a first direction X of the passenger compartment 100 at an angle that is less than 90 degrees in a plan view of the vehicle 10. The detection device 1 uses the reflected waves to detect an in-vehicle living being H that is a detection target.

## Description

### CROSS-REFERENCE TO RELATED APPLICATION

The present application claims priority to Japanese Patent Application No. 2023-191753 filed on November 9, 2023 (entitled "DETECTION DEVICE, DETECTION METHOD, AND VEHICLE"), and the entire contents of the abovelisted application are hereby incorporated by reference for all purposes.

### TECHNICAL FIELD

The present invention relates to a detection device, a detection method, and a vehicle.

### BACKGROUND

For example, patent document 1 discloses a left-behind detection device for detecting an in-vehicle living being (for example, an infant and a young child) left behind in a passenger compartment to issue a warning. In such a left-behind detection device, a timer is activated when a portable device is moved outside a communication area of a vehicle. When the timer reaches a preset timer duration, the left-behind detection device warns that a predetermined time elapses since the infant or the young child is left behind in the passenger compartment.

### RELATED ART DOCUMENT

### PATENT DOCUMENT

[Patent Document 1] JP 2020-149487A

### SUMMARY OF THE INVENTION

### PROBLEMS TO BE SOLVED BY THE INVENTION

Further, in the left-behind detection device described in the patent document 1, a radio wave sensor is used for detecting the in-vehicle living being. The radio wave sensor detects the in-vehicle living being based on a received signal obtained by transmitting a radio wave toward surroundings and receiving a reflected wave thereof. According to a method of detecting the in-vehicle living being with the radio wave sensor, it is possible to expect high detection accuracy because the radio wave can pass through obstacles (such as a blanket) covering the in-vehicle living being and the radio wave sensor can detect minute movements (gestures) such as slight movements of hands and feet of the in-vehicle living being and movements of a chest caused by breathing of the in-vehicle living being.

However, on the other hand, the method of detecting the in-vehicle living being with the radio wave sensor causes the following problem. In a case of using the radio sensor, there is a risk that the detection for the in-vehicle living being is interfered if an out-of-vehicle moving object such as a walking pedestrian, a plant swaying in the wind, and a passing vehicle enter an out-of-vehicle near area that is spaced apart from the radio sensor by a distance equal to or closer than a distance from the radio sensor to a location at which the in-vehicle living being may possibly exist. For example, if a pedestrian exists in the out-of-vehicle near area, there is a risk that the pedestrian is mistakenly detected as the in-vehicle living being.

One method for avoiding such a false detection is to increase the number of transmitting antennas for transmitting the radio wave and receiving antennas for receiving the reflected waves to detect and distinguish between the in-vehicle living being and the out-of-vehicle moving object on angular and directional dimensions.

However, to excessively increase the number of transmitting antennas and receiving antennas directly leads to increase in a manufacturing cost of the device. In particular, a size of the transmitting antenna and the receiving antenna increases in inverse proportion to a frequency of the radio wave. Thus, for a radio wave sensor using an UWB (Ultra-Wide Band) radar operating in a relatively low frequency band, the increase in the size of the device caused by the increase in the number of transmitting antennas and receiving antennas becomes significant.

The present invention has been made in view of these problems. Thus, it is an object of the present invention to provide a detection device that can accurately detect the in-vehicle living being and whose manufacturing cost and size is reduced by using as few transmitting antennas and receiving antennas as possible, a detection method using the detection device, and a vehicle including the detection device.

### MEANS FOR SOLVING THE PROBLEM

The above-mentioned object is achieved by the present inventions respectively defined by the following (1) to (3).
(1) A detection device for detecting a detection target existing in a passenger compartment of a vehicle, comprising:
   a first transmitting antenna and a second transmitting antenna for transmitting radio waves; and
   a first receiving antenna and a second receiving antenna for receiving reflected waves generated when the radio waves are reflected by an object,
   wherein the detection device is arranged in the passenger compartment so that:
      a first imaginary straight line connecting the first transmitting antenna and the second transmitting antenna intersects with a second imaginary straight line connecting the first receiving antenna and the second receiving antenna in a plan view of the vehicle, and
      at least one of the first imaginary straight line and the second imaginary straight line is inclined with respect to a first direction of the passenger compartment at an angle that is less than 90 degrees in the plan view of the vehicle, and
   wherein the detection device uses the reflected waves to detect the detection target.
(2) A detection method for detecting a detection target existing in a passenger compartment of a vehicle, comprising:
   arranging a detection device, that has a first transmitting antenna and a second transmitting antenna for transmitting radio waves, and a first receiving antenna and a second receiving antenna for receiving reflected waves generated when the radio waves are reflected by an object, in the passenger compartment so that:
      a first imaginary straight line connecting the first transmitting antenna and the second transmitting antenna intersects with a second imaginary straight line connecting the first receiving antenna and the second receiving antenna in a plan view of the vehicle, and
      at least one of the first imaginary straight line and the second imaginary straight line is inclined with respect to a first direction of the passenger compartment at an angle that is less than 90 degrees in the plan view of the vehicle, and
   using the reflected waves to detect the detection target.
(3) A vehicle comprising a detection device for detecting a detection target existing in a passenger compartment,
   wherein the detection device has:
      a first transmitting antenna and a second transmitting antenna for transmitting radio waves, and
      a first receiving antenna and a second receiving antenna for receiving reflected waves generated when the radio waves are reflected by an object,
   wherein the detection device is arranged in the passenger compartment so that:
      a first imaginary straight line connecting the first transmitting antenna and the second transmitting antenna intersects with a second imaginary straight line connecting the first receiving antenna and the second receiving antenna in a plan view of the vehicle, and
      at least one of the first imaginary straight line and the second imaginary straight line is inclined with respect to a first direction of the passenger compartment at an angle that is less than 90 degrees in the plan view of the vehicle, and
   wherein the detection device uses the reflected waves to detect the detection target.

### EFFECTS OF THE INVENTION

The detection device of the present invention is arranged in the passenger compartment so that the first imaginary straight line connecting the first transmitting antenna and the second transmitting antenna intersects with the second imaginary straight line connecting the first receiving antenna and the second receiving antenna and at least one of the first imaginary straight line and the second imaginary straight line is inclined with respect to the first direction of the passenger compartment at the angle that is less than 90 degrees in the plan view of the vehicle. By arranging the four antennas as described above, it is possible to suppress the number of antennas and improve an angular resolution with respect to the first direction. Thus, it is possible to provide the detection device whose cost and size are reduced and that can accurately detect the detection target.

Further, the detection method of the present invention contains using the reflected waves, that are obtained by the detection device arranged in the passenger compartment so that the first imaginary straight line connecting the first transmitting antenna and the second transmitting antenna intersects with the second imaginary straight line connecting the first receiving antenna and the second receiving antenna and at least one of the first imaginary straight line and the second imaginary straight line is inclined with respect to the first direction of the passenger compartment at the angle that is less than 90 degrees in the plan view of the vehicle, to detect the detection target. Thus, the angular resolution with respect to the first direction can be improved, and thereby it is possible to accurately detect the detection target.

Further, the vehicle of the present invention has the detection device. The detection device is arranged in the passenger compartment so that the first imaginary straight line connecting the first transmitting antenna and the second transmitting antenna intersects with the second imaginary straight line connecting the first receiving antenna and the second receiving antenna and at least one of the first imaginary straight line and the second imaginary straight line is inclined with respect to the first direction of the passenger compartment at the angle that is less than 90 degrees in the plan view of the vehicle. Thus, it is possible to improve the angular resolution with respect to the first direction, thereby accurately detecting the detection target. Further, since the cost and the size of the detection device are reduced, can accurately detect the detection target. Further, since the cost and the size of the detection device are reduced, it is possible to reduce a cost of the vehicle and easily implement the detection device in the vehicle.

### BRIEF DESCRITION OF THE FIGURES

[Fig. 1] Fig. 1 is a schematic view viewing a vehicle according to a first embodiment from the upper side.
[Fig. 2] Fig. 2 is a schematic view showing an enlarged view of a rear seat of the vehicle shown in Fig. 1.
[Fig. 3] Fig. 3 is a plan view showing a detection device arranged in the vehicle shown in Fig. 1.
[Fig. 4] Fig. 4 is a schematic view showing types of signals transmitted and received by the detection device shown in Fig. 3.
[Fig. 5] Fig. 5 is a schematic view for explaining a problem of the detection device.
[Fig. 6] Fig. 6 is a graph showing an example of shape data of a passenger compartment.
[Fig. 7] Fig. 7 is a schematic view for explaining a problem of the detection device.
[Fig. 8] Fig. 8 is a plan view showing a modified example of the detection device shown in Fig. 3.
[Fig. 9] Fig. 9 is a plan view showing another modified example of the detection device shown in Fig. 3.
[Fig. 10] Fig. 10 is a block diagram showing a configuration of a control unit.
[Fig. 11] Fig. 11 is another block diagram showing the configuration of the control unit.
[Fig. 12] Fig. 12 is a graph showing an example of a first received signal time series.
[Fig. 13] Fig. 13 is a view showing an example of a two-dimensional spectrum indicating a direction of existence of a moving object.
[Fig. 14] Fig. 14 is graphs showing examples of a first received signal, a second received signal, a third received signal, and a fourth received signal.
[Fig. 15] Fig. 15 is a plan view showing a comparative example of the detection device shown in Fig. 3.
[Fig. 16] Fig. 16 is graphs showing examples of the first received signal, the second received signal, the third received signal, and the fourth received signal obtained by the detection device shown in Fig. 15.
[Fig. 17] Fig. 17 is a diagram showing an example of a two-dimensional spectrum indicating the direction of existence of the moving object analyzed by the detection device shown in Fig. 3.
[Fig. 18] Fig. 18 is a graph showing a spectrum at a latitude θ = 0 in Fig. 17.
[Fig. 19] Fig. 19 is a view showing an example of the two-dimensional spectrum indicating the direction of existence of the moving object analyzed by the detection device shown in Fig. 15.
[Fig. 20] Fig. 20 is a graph showing the spectrum at the latitude θ = 0 in Fig. 19.
[Fig. 21] Fig. 21 is a flowchart for explaining a detection method using the detection device.
[Fig. 22] Fig. 22 is a plan view showing a detection device according to a second embodiment.
[Fig. 23] Fig. 23 is a schematic view showing an example of the vehicle.
[Fig. 24] Fig. 24 is a plan view showing a modified example of the detection device shown in Fig. 22.
[Fig. 25] Fig. 25 is a plan view showing another modified example of the detection device shown in Fig. 3.
[Fig. 26] Fig. 26 is a plan view showing another modified example of the detection device shown in Fig. 3.

### DETAILED DESCRIPTION OF THE PREFERRED EMBODIMENTS

Hereinafter, detailed description will be given to a detection device, a detection method, and a vehicle of the present invention based on preferred embodiments shown in the accompanying drawings.

### <First embodiment>

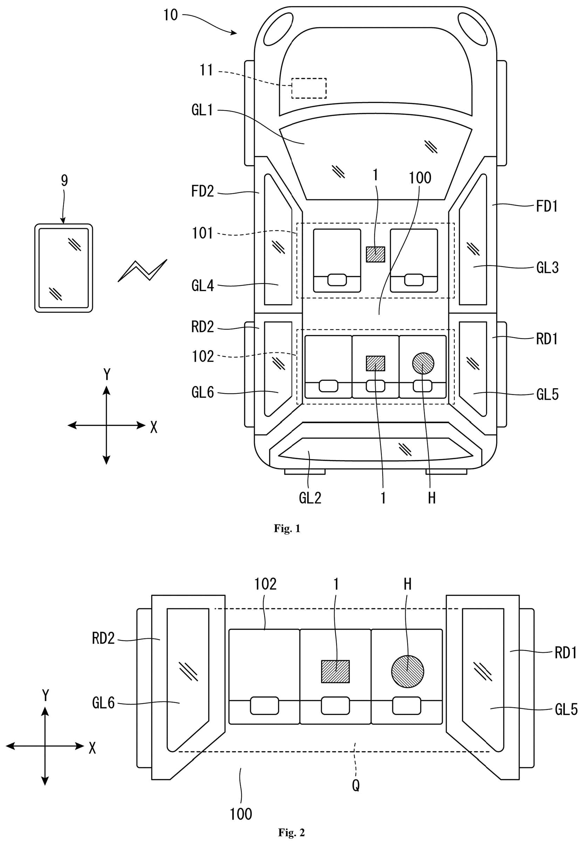

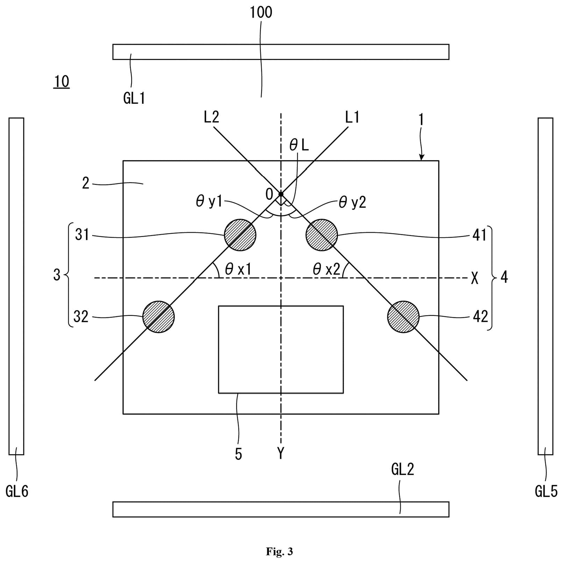

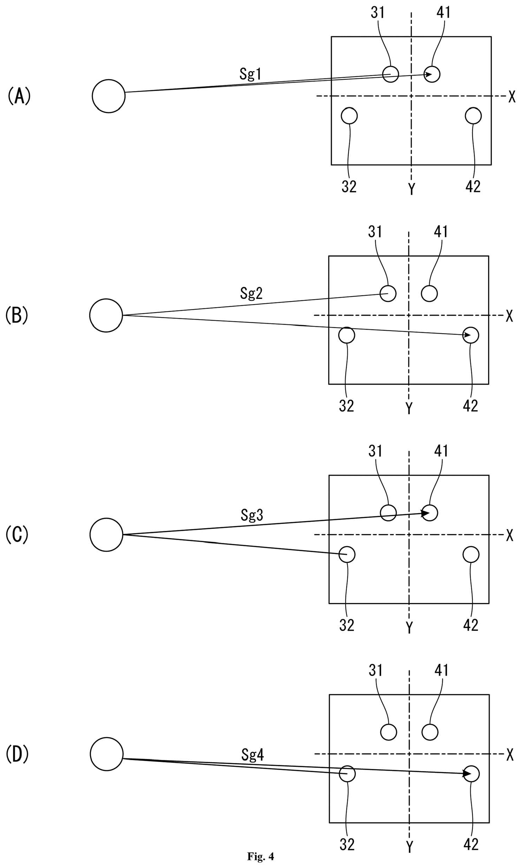

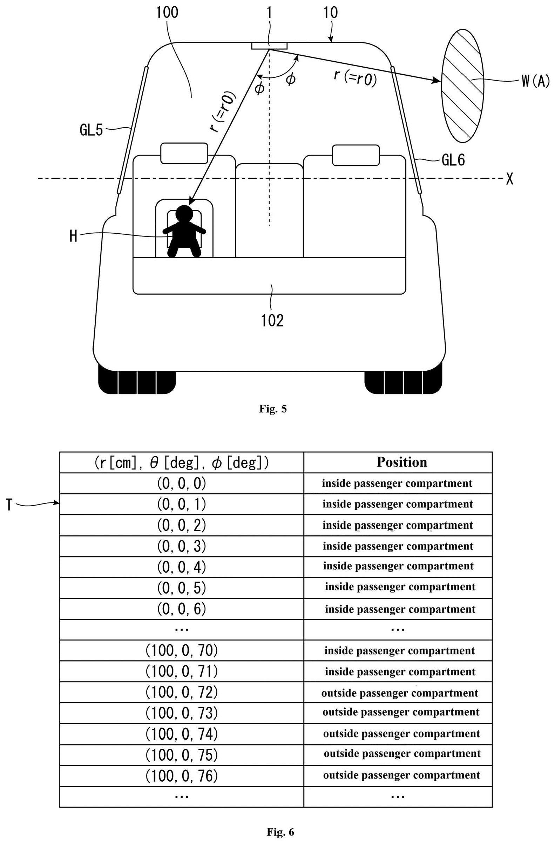

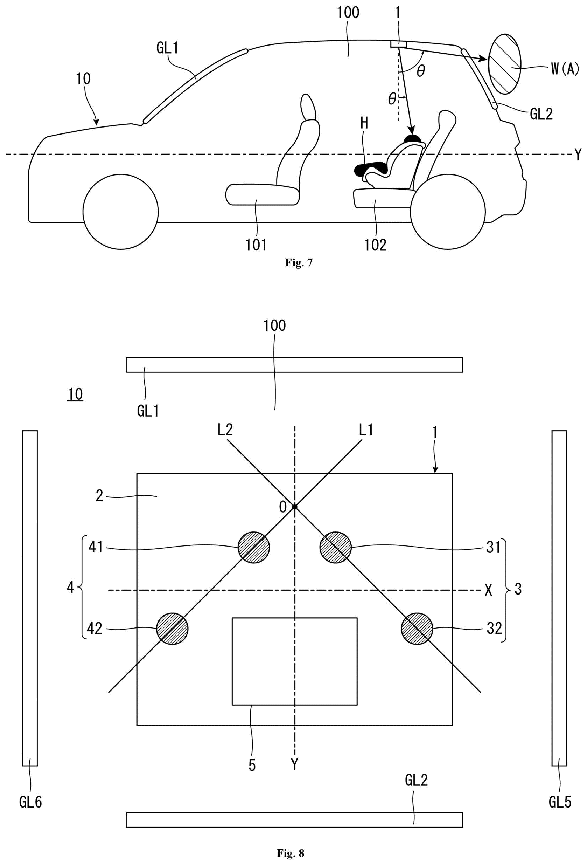

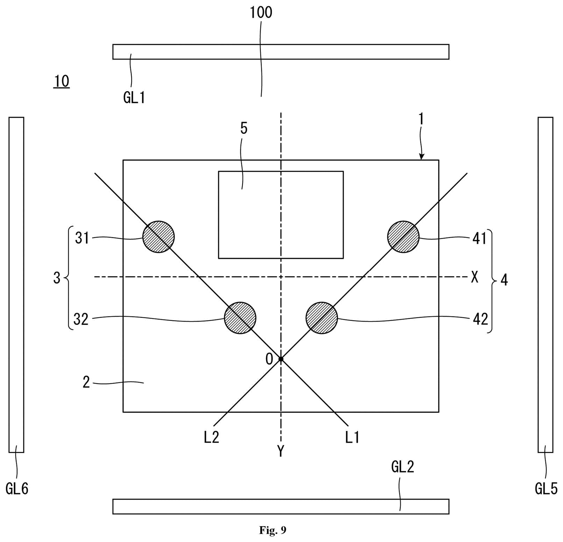

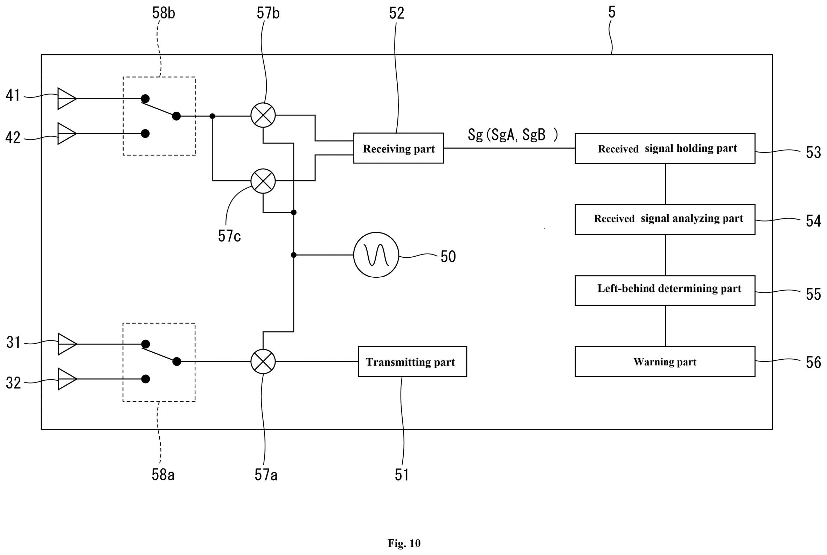

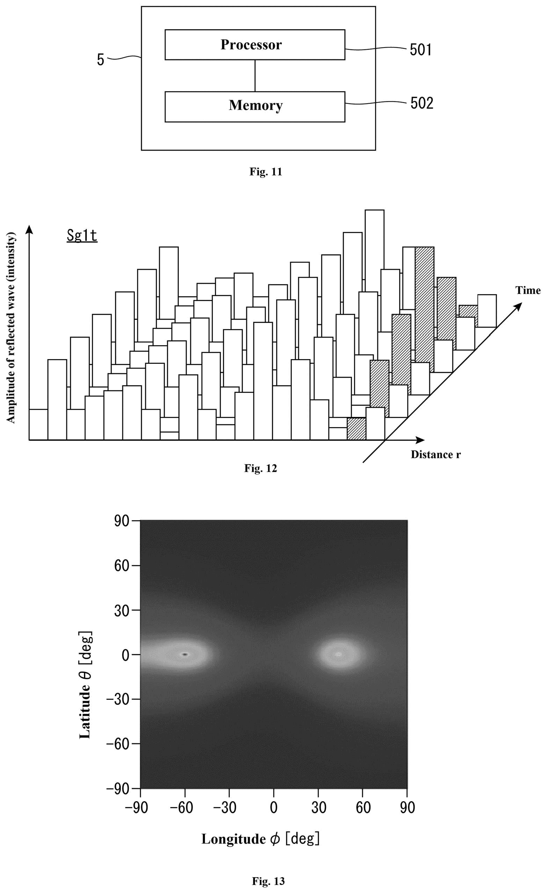

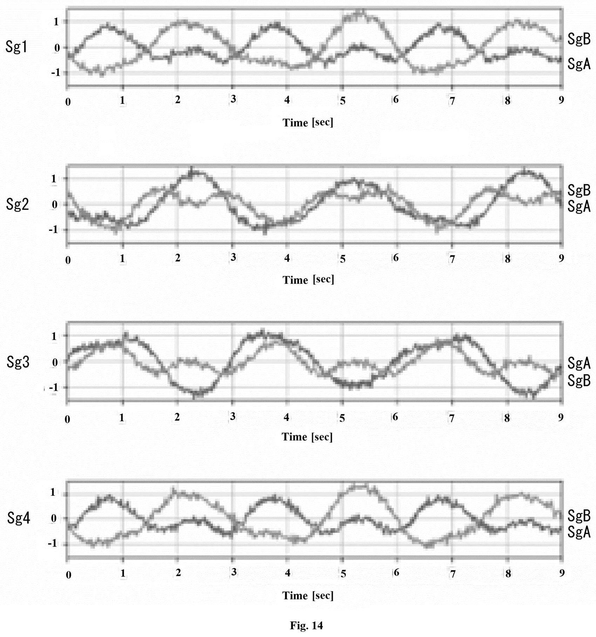

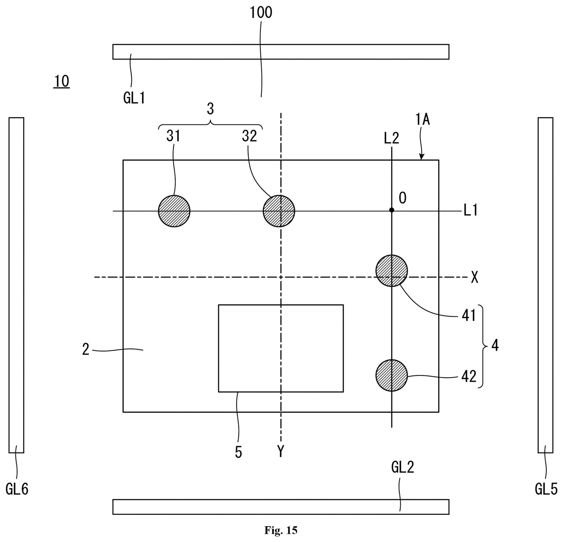

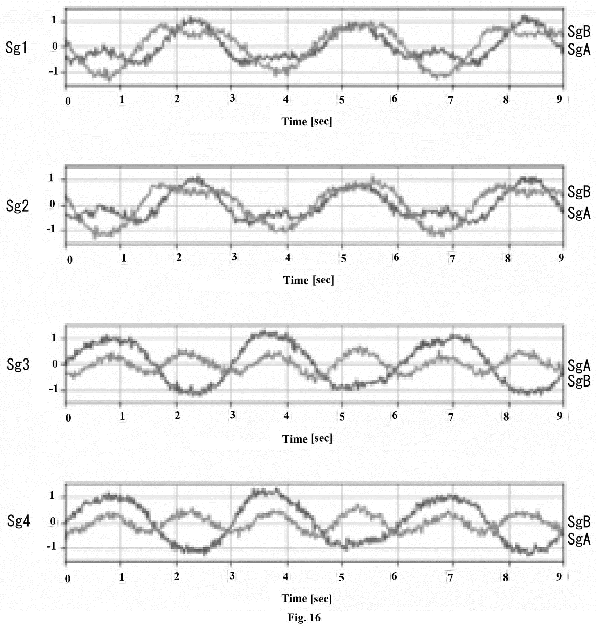

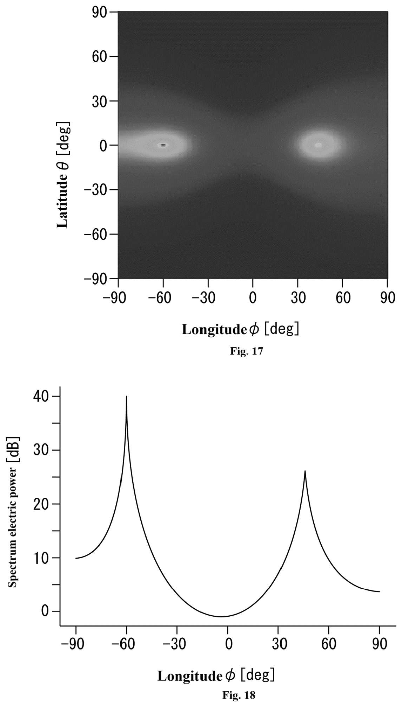

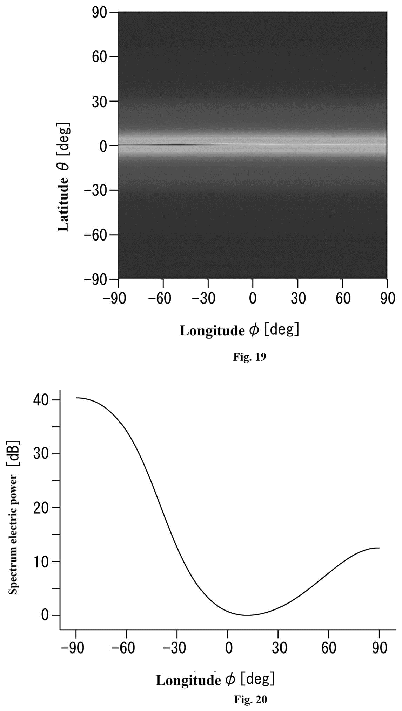

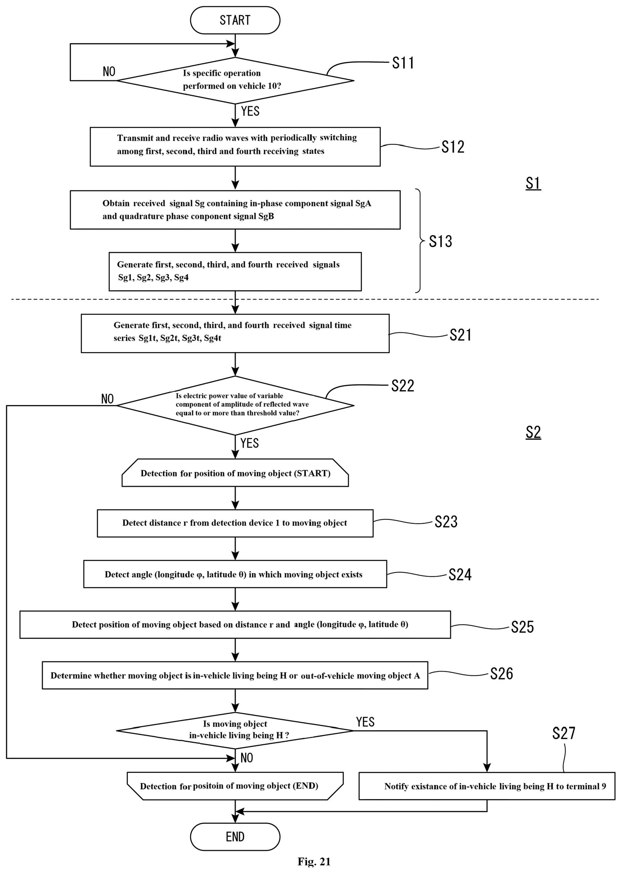

Fig. 1 is a schematic view viewing a vehicle according to the first embodiment from the upper side. Fig. 2 is a schematic view showing an enlarged view of a rear seat of the vehicle shown in Fig. 1. Fig. 3 is a plan view showing a detection device arranged in the vehicle shown in Fig. 1. Fig. 4 is a schematic view showing types of signals transmitted and received by the detection device shown in Fig. 3. Fig. 5 is a schematic view for explaining a problem of the detection device. Fig. 6 is a graph showing an example of shape data of a passenger compartment. Fig. 7 is a schematic view for explaining a problem of the detection device. Fig. 8 is a plan view showing a modified example of the detection device shown in Fig. 3. Fig. 9 is a plan view showing another modified example of the detection device shown in Fig. 3. Fig. 10 is a block diagram showing a configuration of a control unit. Fig. 11 is another block diagram showing the configuration of the control unit. Fig. 12 is a graph showing an example of a first received signal time series. Fig. 13 is a view showing an example of a two-dimensional spectrum indicating a direction of existence of a moving object. Fig. 14 is graphs showing examples of a first received signal, a second received signal, a third received signal, and a fourth received signal. Fig. 15 is a plan view showing a comparative example of the detection device shown in Fig. 3. Fig. 16 is graphs showing examples of the first received signal, the second received signal, the third received signal, and the fourth received signal obtained by the detection device shown in Fig. 15. Fig. 17 is a diagram showing an example of a two-dimensional spectrum indicating the direction of existence of the moving object analyzed by the detection device shown in Fig. 3. Fig. 18 is a graph showing a spectrum at a latitude θ = 0 in Fig. 17. Fig. 19 is a view showing an example of the two-dimensional spectrum indicating the direction of existence of the moving object analyzed by the detection device shown in Fig. 15. Fig. 20 is a graph showing the spectrum at the latitude θ = 0 in Fig. 19. Fig. 21 is a flowchart for explaining a detection method using the detection device.

A vehicle 10 shown in Fig. 1 has a detection device 1 arranged in a passenger compartment 100 and a vehicle control unit 11 for controlling each component of the vehicle 10. The detection device 1 detects an in-vehicle living being H, that is a detection target existing in the passenger compartment 100, to notify existence of the in-vehicle living being H to a terminal 9 of a user. This detection device 1 is suitably used for detecting the in-vehicle living being H, particularly an infant or a young child left behind in the passenger compartment 100. With this configuration, it is possible to effectively reduce a risk that the infant or the young child is exposed to danger due to a harsh environment in the passenger compartment 100. However, an application of the detection device 1 is not particularly limited.

Although the vehicle 10 is not specifically limited, the vehicle 10 may be typically a passenger vehicle such as a light automobile, a compact car, a standard-sized car, and a large vehicle whose size is medium or large. However, the vehicle 10 is not limited to the passenger vehicle and may be a train, an airplane, a ship, or the like. Further, the terminal 9 is not specifically limited as long as it can receive a signal from the detection device 1. Typically, the terminal 9 may be a smartphone. However, the terminal 9 is not limited to a smartphone. For example, the terminal 9 may be a wearable device such as a smartwatch, a tablet terminal, a laptop personal computer, a desktop personal computer, or the like.

Here, the vehicle 10 shown in Fig. 1 will be briefly described. The vehicle 10 has a front seat line 101 in which a driver's seat and a front passenger seat are horizontally aligned, and a rear seat line 102 located on the rear side of the front seat line 101 and in which three seats are horizontally aligned. Further, the vehicle 10 has a front glass GL1 which serves as a window located at a front area of the passenger compartment 100, and a rear glass GL2 which serves as a window located at a rear area of the passenger compartment 100. Furthermore, front doors FD1, FD2 for boarding are respectively arranged on both left and right sides of the front seat line 101, and front door glasses GL3, GL4 which serve as windows are respectively arranged at the front doors FD1, FD2. Furthermore, rear doors RD1, RD2 for boarding are respectively arranged on both left and right sides of the rear seat line 102, and rear door glasses GL5, GL6 which serve as windows are respectively arranged at the rear doors RD1, RD2.

However, the configuration of the vehicle 10 is not particularly limited. For example, the rear seat line 102 may be omitted, or additional seats, such as a third or fourth seat line, may be arranged on the rear side of the rear seat line 102.

For example, the detection device 1 is arranged on a ceiling of the passenger compartment 100 for more reliably detecting the in-vehicle living being H. With this configuration, obstacles are less likely to exist between the detection device 1 and the in-vehicle living being H, thereby radio waves transmitted from the detection device 1 are facilitated to reach the in-vehicle living being H. Thus, it is possible to more reliably detect the in-vehicle living being H.

However, an arrangement of the detection device 1 is not particularly limited. For example, the detection device 1 may be arranged on a side wall or a floor of the passenger compartment 100.

Further, in this case, it is preferable to arrange at least one detection device 1 for each seat line of the vehicle 10. With this configuration, it is possible to more reliably detect the in-vehicle living being H without being affected by a seating position of the in-vehicle living being H. As described above, the vehicle 10 has a two-line structure containing the front seat line 101 and the rear seat line 102. Thus, in the present embodiment, one detection device 1 for the front seat line 101 is arranged on a ceiling of a center portion of the front seat line 101, and another detection device 1 for the rear seat line 102 is arranged on a ceiling of a center portion of the rear seat line 102.

However, the arrangement of the detection device 1 is not particularly limited. For example, one detection device 1 may be arranged above the front seat line 101, and this detection device 1 may detect both of an in-vehicle living being H seated on the front seat line 101 and another in-vehicle living being H seated on the rear seat line 102. Further, one detection device 1 may be arranged above the rear seat line 102, and this detection device 1 may detect both of an in-vehicle living being H seated on the front seat line 101 and another occupant H seated on the rear seat line 102. Furthermore, one detection device 1 may be arranged at a center portion of the passenger compartment 100 (for example, located between the front seat line 101 and the rear seat line 102), and this detection device 1 may detect both of an in-vehicle living being H seated on the front seat line 101 and another living being H seated on the rear seat line 102.

In this regard, the in-vehicle living being H, particularly the infant or the young child is most often left on the rear seat line 102. Thus, the following description will be representatively given to a case that the in-vehicle living being H seated on the rear seat line 102 is detected by the detection device 1 arranged above the rear seat line 102 for the sake of explanation. Further, in the following description, a direction in which the rear doors RD1, RD2 are aligned, that is a left and right direction of the vehicle 10 is sometimes referred to as "a first direction X" in a plan view taken by viewing the vehicle 10 from the upper side (hereinafter, simply referred to as "a plan view of the vehicle 10") for the sake of explanation. Further, a direction in which the front glass GL1 and the rear glass GL2 are aligned, that is a front and rear direction of the vehicle 10 is sometimes referred to as "a second direction Y". Thus, in the present embodiment, the first direction X and the second direction Y are perpendicular to each other.

However, the first direction X and the second direction Y are not particularly limited and may be set appropriately depending on the configuration of the vehicle 10, particularly depending on the arrangement of the windows. For example, the front and rear direction of the vehicle 10 may be defined as the first direction X, and the left and right direction of the vehicle 10 may be defined as the second direction Y. Furthermore, the first direction X and the second direction Y may not be perpendicular to each other and may intersect with each other at an angle that is less than 90 degrees.

The detection device 1 is a UWB (Ultra-Wide Band) communication device that can perform UWB communication with an external device such as the terminal 9 and the vehicle 10. The detection device 1 can be utilized as a UWB radar for detecting the in-vehicle living being H. However, the type of radar used in the detection device 1 is not particularly limited. For example, it may be an FMCW (Frequency Modulated Continuous Wave) radar, a CW (Continuous Wave) radar, or the like. Furthermore, radio waves used for the communication with the terminal 9 or the vehicle 10 may be different from radio waves used for detecting the in-vehicle living being H. For example, the communication may be performed with the UWB (Ultra-Wideband) communication and the detection for the moving object may be performed with the FMCW radar or the CW radar.

As shown in Fig. 2, the detection device 1 is arranged in a region Q in which the rear door glasses GL5, GL6 face each other in the plan view of the vehicle 10.

Further, as shown in Fig. 3, the detection device 1 has a circuit board 2, a transmitting antenna group 3 and a receiving antenna group 4 that are arranged on the circuit board 2, and a control unit 5 that is arranged on the circuit board 2 and performs control of the detection device 1. Further, the transmitting antenna group 3 includes a first transmitting antenna 31 and a second transmitting antenna 32. Further, the receiving antenna group 4 includes a first receiving antenna 41 and a second receiving antenna 42. These four antennas 31, 32, 41, 42 are electrically connected to the control unit 5 through the circuit board 2.

In this regard, although the detection device 1 includes the control unit 5 in the present embodiment, the present invention is not limited thereto. For example, the control unit 5 may be incorporated into the vehicle control unit 11 of the vehicle 10.

The circuit board 2 may be a hard rigid board or a flexible board having flexibility. In the present embodiment, the rigid board is used as the circuit board 2. Further, the first and second transmitting antennas 31, 32 and the first and second receiving antennas 41, 42 are arranged on the circuit board 2 so as to be spaced apart from each other. Among these antennas, the first and second transmitting antennas 31, 32 transmit the radio waves into the passenger compartment 100. In this regard, since the detection device 1 is the UWB radar as described above, the radio waves transmitted by the first and second transmitting antennas 31, 32 are UWB pulse signals whose pulse widths are short, such as microwaves. On the other hand, the first and second receiving antennas 41, 42 receive reflected waves generated when the radio waves transmitted by the first and second transmitting antennas 31, 32 are reflected by an object.

As shown in Figs. 4(A) to (D), the detection device 1 obtains a first received signal Sg1 obtained by receiving the reflected wave, that is generated when the radio wave transmitted from the first transmitting antenna 31 is reflected by a surrounding object, with the first receiving antenna 41, a second received signal Sg2 obtained by receiving the reflected wave, that is generated when the radio wave transmitted from the first transmitting antenna 31 is reflected by the surrounding object, with the second receiving antenna 42, a third received signal Sg3 obtained by receiving the reflected wave, that is generated when the radio wave transmitted from the second transmitting antenna 32 is reflected by the surrounding object, with the first receiving antenna 41, and a fourth received signal Sg4 obtained by receiving the reflected wave, that is generated when the radio wave transmitted from the second transmitting antenna 32 is reflected by the surrounding object, with the second receiving antenna 42. The detection device 1 uses these first to fourth received signals Sg1 to Sg4 to detect the in-vehicle living being H.

Here, the radio waves transmitted from the first and second transmitting antennas 31, 32 pass through the rear door glasses GL5, GL6. Thus, if a moving object W exists in the vicinity of the rear door glass GL6, which is even outside the passenger compartment 100 as shown in Fig. 5, the detection device 1 can detect existence of the moving object W through the rear door glass GL6. By using the UWB radar, it is possible to easily detect a distance r from the detection device 1 to the moving object W.

However, even if the moving object W exists at the same distance r0, there is a possibility that the moving object W is the in-vehicle living being H located in the passenger compartment 100 or there is a possibility that the moving object W is an out-of-vehicle moving object A located outside the passenger compartment 100 as shown in Fig. 5 depending on a direction from the detection device 1. Thus, in order to identify whether the moving object W is the in-vehicle living being H or the out-of-vehicle moving object A, only the distance r is insufficient and it is necessary to detect a direction of the moving object W with respect to the detection device 1, that is an angle (a longitude φ and a latitude θ) of the moving object W with respect to the detection device 1 in addition to the distance r. If the distance r and the angle are known as described above, a position of the moving object W is estimated and then the estimated position is compared with shape data of the passenger compartment 100 prepared in advance. As a result, it is possible to accurately identify whether the moving object W is the in-vehicle living being H or the out-of-vehicle moving object A.

In this regard, the moving object W is not particularly limited. For example, the moving object W may be a living being such as a human, a bird, a dog, and a cat, a plant such as a street tree and a weed, a moving car, a moving motorcycle, a moving bicycle, or the like. Further, the shape data of the passenger compartment 100 is not particularly limited. For example, as shown in Fig. 6, the shape date may be a table T or the like prepared by determining whether each combination of polar coordinates (r, θ, φ) corresponds to the inside of the passenger compartment 100 or the outside of the passenger compartment 100 in advance. According to the above-mentioned method, it is possible to easily distinguish between the in-vehicle living being H and the out-of-vehicle moving object A.

The same description can be applied to the second direction Y that is the direction in which the front glass GL1 and the rear glass GL2 are aligned. For example, if the moving object W exists in the vicinity of the rear glass GL2 even outside the passenger compartment 100 as shown in Fig. 7, the detection device 1 detects existence of the moving object W through the rear glass GL2. In order to identify whether the moving object W is the in-vehicle living being H or the out-of-vehicle moving object A, only the distance r is insufficient and it is necessary to detect the direction of the moving object W with respect to the detection device 1, that is the angle (the longitude φ and the latitude θ) of the moving object W with respect to the detection device 1 in addition to the distance r.

For the reason stated above, for the detection device 1, the number and the arrangements of the first and second transmitting antennas 31, 32 and the first and second receiving antennas 41, 42 are carefully considered to suppress increase in the number of antennas and reduce a cost and a size of the device as well as improve each of an angular resolution with respect to the first direction X in which the rear door glasses GL5, GL6 are aligned and an angular resolution with respect to the second direction Y in which the front glass GL1 and the rear glass GL2 are aligned, thereby improving accuracy of determination whether the moving object W is the in-vehicle living being H or the out-of-vehicle moving object A. Thus, the cost and the size of the detection device 1 are reduced and the detection device 1 can accurately detect the in-vehicle living being H.

Hereinafter, detailed description will be given to the arrangements of the first and second transmitting antennas 31, 32 and the first and second receiving antennas 41, 42 based on Fig. 3. In the plan view of the vehicle 10, the first and second transmitting antennas 31, 32 and the first and second receiving antennas 41, 42 are arranged symmetrically with respect to a center axis of the vehicle 10. Although the first transmitting antenna 31 and the second transmitting antenna 32 are illustrated as circular shapes in Fig. 3 for the sake of explanation, each of their shapes is not particularly limited. The same description can be applied to the first receiving antenna 41 and the second receiving antenna 42.

Further, the first transmitting antenna 31 and the second transmitting antenna 32 are arranged so as to be offset from each other in the first direction X. The second transmitting antenna 32 is arranged on the outer side of the first transmitting antenna 31 (a side of the rear door glass GL6). Furthermore, the first transmitting antenna 31 and the second transmitting antenna 32 are arranged so as to be offset from each other in the second direction Y. The second transmitting antenna 32 is arranged on the rear side of the first transmitting antenna 31 (on a side of the rear glass GL2).

Similarly, the first receiving antenna 41 and the second receiving antenna 42 are arranged so as to be offset from each other in the first direction X. The second receiving antenna 42 is arranged on the outer side of the first receiving antenna 41 (on a side of the rear door glass GL5). Furthermore, the first receiving antenna 41 and the second receiving antenna 42 are arranged so as to be offset from each other in the second direction Y. The second receiving antenna 42 is arranged on the rear side of the first receiving antenna 41 (on the side of the rear glass GL2).

Further, the first transmitting antenna 31 and the first receiving antenna 41 are arranged so as to be aligned in the first direction X. The second transmitting antenna 32 and the second receiving antenna 42 are also arranged so as to be aligned in the first direction X.

Thus, when a straight line connecting the first transmitting antenna 31 and the second transmitting antenna 32 is defined as a first imaginary straight line L1 and a straight line connecting the first receiving antenna 41 and the second receiving antenna 42 is defined as a second imaginary straight line L2, the first imaginary straight line L1 and the second imaginary straight line L2 respectively extend in mutually different directions and intersect with each other at an intersection point O in the plan view.

In this regard, the first imaginary straight line L1 may be any straight line connecting an arbitrary point on the first transmitting antenna 31 and an arbitrary point on the second transmitting antenna 32 in the plan view. Although the arbitrary points may be freely set on the first transmitting antenna 31 and the second transmitting antenna 32 respectively, it is preferable to set them so as to correspond to each other. Namely, it is preferable to define a straight line connecting corresponding points on the first transmitting antenna 31 and the second transmitting antenna 32 as the first imaginary straight line L1. In the present embodiment, the first transmitting antenna 31 and the second transmitting antenna 32 have the same configuration and a straight line connecting their center points (origins) is defined as the first imaginary straight line L1.

The same description can be applied to the second imaginary straight line L2. In the plan view, the second imaginary straight line L2 may be any straight line connecting an arbitrary point on the first receiving antenna 41 and an arbitrary point on the second receiving antenna 42. Although the arbitrary points may be freely set on the first receiving antenna 41 and the second receiving antenna 42 respectively, it is preferable to set them so as to correspond to each other. Namely, it is preferable to define a straight line connecting corresponding points on the first receiving antenna 41 and the second receiving antenna 42 as the second imaginary straight line L2. In the present embodiment, the first receiving antenna 41 and the second receiving antenna 42 have the same configuration and a straight line connecting their center points (origins) is defined as the second imaginary straight line L2.

Further, the first imaginary straight line L1 is inclined with respect to the first direction X at an angle θx1 that is less than 90 degrees. Additionally, the first imaginary straight line L1 is inclined with respect to the second direction Y at an angle θy1 that is less than 90 degrees. Namely, the first imaginary straight line L1 is inclined with respect to each of the first direction X and the second direction Y.

Similarly, in the plan view, the second imaginary straight line L2 is inclined with respect to the first direction X at an angle θx2 that is less than 90 degrees. Additionally, the second imaginary straight line L2 is inclined with respect to the second direction Y at an angle θy2 that is less than 90 degrees. Namely, the second imaginary straight line L2 is inclined with respect to each of the first direction X and the second direction Y.

As described above, by arranging the four antennas 31,32, 41, 42 so that the first imaginary straight line L1 intersects with the second imaginary straight line L2 and each of the first imaginary straight line L1 and the second imaginary straight line L2 is inclined with respect to the first direction X and the second direction Y at the angle that is less than 90 degrees, it is possible to improve both of the angular resolution with respect to the first direction X and the angular resolution with respect to the second direction Y without excessively increasing the number of antennas. Thus, the detection device 1 can accurately detect the in-vehicle living being H without being affected by the out-of-vehicle moving object A detected through the front glass GL1, the rear glass GL2, and the rear door glasses GL5, GL6. Furthermore, by limiting the number of antennas to four, it is also possible to reduce the cost and the size of the detection device 1.

Here, an intersection angle θL between the first imaginary straight line L1 and the second imaginary straight line L2 is not particularly limited. It is preferable that the intersection angle θL is as close to 90 degrees (a right angle) as possible. Specifically, the intersection angle θL is preferably in a range of 45 to 135 degrees, more preferably in a range of 60 to 120 degrees, and even more preferably in a range of 85 to 95 degrees. In the present embodiment, the intersection angle θL is 90 degrees. Further, although the angles θx1, θy1 and the angles θx2, θy2 are not particularly limited, they are preferably as close to 45 degrees as possible. Specifically, each of the angles θx1, θx2, θy1, θy2 is preferably in a range of 30 to 60 degrees, more preferably in a range of 35 to 55 degrees, and even more preferably in a range of 40 to 50 degrees. In the present embodiment, all of the angles θx1, θx2, θy1, θy2 are 45 degrees. By arranging the antennas as described above, it is possible to improve the angular resolution with respect to the first direction X and the angular resolution with respect to the second direction Y in a well-balanced manner.

It is preferable that the antennas are arranged so that each of a distances between the first transmitting antenna 31 and the second transmitting antenna 32 and a distance between the first receiving antenna 41 and the second receiving antenna 42 is set to be fall within a range of 16 to 25 mm corresponding to a wavelength of the radio wave in the UWB frequency band (about 6.0 to 8.5 GHz) in free space. However, if a radiation beam width of each antenna is narrow, that is if an angular range detectable by the UWB radar is narrow, a higher angular resolution can be achieved by increasing the distances between the antennas. For example, if a radiation beam width of each antenna 31, 32, 41, 42 is narrow (for example, in a range of -45 to 45 degrees), it is possible to achieve approximately double the angular resolution by increasing the distances between the antennas to 50 mm.

Although the arrangements of the four antennas 31, 32, 41, 42 have been explained in detail, the arrangements are not particularly limited as long as the first imaginary straight line L1 intersects with the second imaginary straight line L2 and at least one of the first imaginary straight line L1 and the second imaginary straight line L2 is inclined with respect to the first direction X at the angle that is less than 90 degrees. For example, the arrangements of the antennas 31, 32, 41, 42 may be reversed in the left and right direction compared to the present embodiment as shown in Fig. 8. Furthermore, as shown in Fig. 9, the arrangements of the antennas 31, 32, 41, 42 may be reversed in the front and rear direction compared to the present embodiment.

Further, as shown in Fig. 10, the control unit 5 has a transmitting part 51, a receiving part 52, a received signal holding part 53, a received signal analyzing part 54, a left-behind determining part 55, and a warning part 56.

For example, the control unit 5 is constituted of a computer. As shown in Fig. 11, the control unit 5 has one or more processors 501 for processing information and a memory 502 communicatively connected to the processor 501.

Further, the processor 501 is a computational processing unit such as one or more microprocessors, microcomputers, microcontrollers, digital signal processors (DSPs), central processing units (CPUs), memory control units (MCUs), graphics processing units (GPUs), state machines, logic circuits, application-specific integrated circuits (ASICs), or a combination thereof, that can perform computational processing such as signal manipulation based on a computer-readable instruction. In particular, the processor 501 is configured to fetch computer-readable instructions (for example, data and programs) stored in the memory 502 to perform computations, signal operations, and control.

Further, for example, the memory 502 is a computer readable medium such as a volatile storage medium (e.g., RAM, SRAM, DRAM), a non-volatile storage medium (e.g., a ROM, an EPROM, an EEPROM, a flash memory, a hard disk, a solid-state drive, an optical disc, a CD-ROM, a digital versatile disc (DVD), a Blue-ray disc, a magnetic cassette, a magnetic tape, and a magnetic disk), and a combination thereof.

The above-described memory 502 is communicatively connected to the processor 501 and stores programs and data that can be executed by the processor 501. The processor 501 reads and executes the programs stored in the memory 502. As a result, the control unit 5 functions as the transmitting part 51, the receiving part 52, the received signal holding part 53, the received signal analyzing part 54, the left-behind determining part 55, and the warning part 56.

As shown in Fig. 10, the transmitting part 51 generates a pulse signal. The pulse signal generated by the transmitting part 51 is multiplied by a local oscillation signal emitted from a local oscillator 50 at a multiplier 57a and thereby the pulse signal is modulated (upconverted) to a predetermined frequency band, such as a short wavelength band of about 6.0 to 8.5 GHz. The pulse signal upconverted by the multiplier 57a is transmitted as a pulsed radio wave (pulse wave) from the first transmitting antenna 31 or the second transmitting antenna 32 through an RF switch 58a.

The RF switch 58a periodically switches between a state that the multiplier 57a is connected to the first transmitting antenna 31 and the radio wave is transmitted from the first transmitting antenna 31 and a state that the multiplier 57a is connected to the second transmitting antenna 32 and the radio wave is transmitted from the second transmitting antenna 32. Although a switching cycle of the RF switch 58a is not particularly limited, it may be set to about 100 Hz, for example.

The radio wave transmitted from the first transmitting antenna 31 or the second transmitting antenna 32 reaches the object existing in a detection area of the detection device 1 and is reflected by the object. Then, the reflected wave generated by this reflection is received by the first receiving antenna 41 or the second receiving antenna 42. The first receiving antenna 41 and the second receiving antenna 42 are connected to an RF switch 58b.

The RF switch 58b periodically switches between a state that the reflected wave is received by the first receiving antenna 41 and a state that the reflected wave is received by the second receiving antenna 42. A switching cycle of the RF switch 58b is equal to the switching cycle of the RF switch 58a and is phase-shifted by 180 degrees with respect to the switching cycle of the RF switch 58a.

Thus, a first receiving state that the first receiving antenna 41 receives the reflected wave of the radio wave transmitted from the first transmitting antenna 31, a second receiving state that the second receiving antenna 42 receives the reflected wave of the radio wave transmitted from the first transmitting antenna 31, a third receiving state that the first receiving antenna 41 receives the reflected wave of the radio wave transmitted from the second transmitting antenna 32, and a fourth receiving state that the second receiving antenna 42 receives the reflected wave of the radio wave transmitted from the second transmitting antenna 32 are periodically switched at a cycle of 50 Hz. Namely, one cycle consisted of the first receiving state, the second receiving state, the third receiving state, and the fourth receiving state is repeated at a cycle of 200 Hz.

The reflected wave received by the first receiving antenna 41 or the second receiving antenna 42 is split and fed into a multiplier 57b and an orthogonal multiplier 57c. In the multiplier 57b, the reflected wave received by the first and second receiving antennas 41, 42 is demodulated (down-converted) so that the demodulated reflected wave is in-phase with the pulse signal transmitted from the transmitting part 51. Then, an in-phase component signal SgA that exhibits a time response characteristic based on the pulse signal transmitted from the transmitting part 51 is derived in the receiving part 52. On the other hand, the reflected wave received by the first and second receiving antennas 41, 42 is demodulated (down-converted) in the orthogonal multiplier 57c so that the demodulated reflected wave is in quadrature phase with the pulse signal transmitted from the transmitting part 51, that is, the demodulated reflected wave is phase-shifted with respect to the pulse signal by 1/4 cycle. Then, a quadrature phase component signal SgB that exhibits a time response characteristic based on a signal orthogonal to the pulse signal transmitted from the transmitting part 51 is derived in the receiving part 52. Phase information is contained in a correlation relationship between the in-phase component signal SgA and the quadrature phase component signal SgB obtained as described above. According to this method, a received signal Sg containing the in-phase component signal SgA and the quadrature phase component signal SgB can be obtained.

The received signal holding part 53 is synchronized with a timing at which the transmitting part 51 generates the pulse signal and the switching timings of the RF switches 58a, 58b. Further, based on these timings, the received signal holding part 53 categorizes the received signal Sg derived by the receiving part 52 into a first received signal Sg1 obtained in the first receiving state, a second received signal Sg2 obtained in the second receiving state, a third received signal Sg3 obtained in the third receiving state, and a fourth received signal Sg4 obtained in the fourth receiving state and separately stores them.

Further, as shown in Fig. 12, the received signal holding part 53 generates and holds a first received signal time series Sg1t in which the first received signals Sg1 repeatedly obtained at every cycle of 200 Hz are arranged in chronological order. Similarly, the received signal holding part 53 generates and holds a second received signal time series Sg2t in which the second received signals Sg2 are arranged in chronological order, a third received signal time series Sg3t in which the third received signals Sg3 are arranged in chronological order, and a fourth received signal time series Sg4t in which the fourth received signals Sg4 are arranged in chronological order.

In this regard, the first received signal time series Sg1t shown in Fig. 12 is a schematic view for simplifying explanation. In Fig. 12, a horizontal axis represents the distance r from the detection device 1, a vertical axis represents an amplitude (intensity) of the reflected wave received by the first receiving antenna 41, and a depth axis represents time. From this first received signal time series Sg1t, it can be seen that some moving object, that is the in-vehicle living being H or the out-of-vehicle moving object A exists at the distance r (a distance indicated by hatching) in which the amplitude of the reflected wave changes over time. Although this is not shown in the drawings, the same description can be applied to the second, third, and fourth received signal time series Sg2t, Sg3t, Sg4t. Namely, it is possible to detect the distance r from the detection device 1 to the moving object from the first, second, third, and fourth received signal time series Sg1t, Sg2t, Sg3t, Sg4t.

It is possible to detect the distance r from the detection device 1 to the moving object from only the first, second, third, and fourth received signal time series Sg1t, Sg2t, Sg3t, Sg4t. However, it is impossible to detect the direction in which the moving object exists, that is the angle (the longitude φ and the latitude θ) in which the moving object exists from only the first, second, third, and fourth received signal time series Sg1t, Sg2t, Sg3t, Sg4t. Thus, the received signal analyzing part 54 analyzes the first, second, third, and fourth received signal time series Sg1t, Sg2t, Sg3t, Sg4t to estimate the direction in which the detected moving object exists.

An estimation method is not particularly limited. For example, any known analysis methods such as a MUSIC (Multiple Signal Classification) method, an ESPRIT (Estimation of Signal Parameters via Rotational Invariance Techniques) method, a Beamformer method, a Capon method, and a linear prediction method may be used. In the present embodiment, the MUSIC method is used to analyze correlation relationships among the four received signal time series Sg1t, Sg2t, Sg3t, Sg4t to perform the above-mentioned estimation. By using the MUSIC method as described above, it is possible to accurately perform the above-mentioned estimation.

The received signal analyzing part 54 obtains a two-dimensional spectrum as shown in Fig. 13, that indicates the direction of existence of the moving object, through the analysis using the MUSIC method. In this two-dimensional spectrum, a vertical axis represents the latitude θ (see Fig. 7) for indicating a position in the second direction Y, and a horizontal axis represents the longitude φ (see Fig. 5) for indicating a position in the first direction X. The detection device 1 is located at an origin where both of the longitude φ and the latitude θ are zero. Further, the received signal analyzing part 54 can estimate that the moving object exists at a position of a spectrum peak in the two-dimensional spectrum, that is, a whitest portion in the drawing. With this configuration, it is possible to easily and accurately direct the direction of the moving object, that is the angle (the longitude φ and the latitude θ) of the moving object with respect to the detection device 1. Further, the received signal analyzing part 54 uses at least one of the first, second, third, and fourth received signal time series Sg1t, Sg2t, Sg3t, Sg4t to detect the distance r from the detection device 1 to the moving object. The received signal analyzing part 54 can estimate the position of the moving object based on the distance r, the longitude φ, and the latitude θ obtained as described above.

The left-behind determining part 55 compares the position of the moving object estimated by the received signal analyzing part 54 with the shape data of the passenger compartment 100 stored in the memory 502 in advance to determine whether the moving object is the in-vehicle living being H located in the passenger compartment 100 or the out-of-vehicle moving object A located outside the passenger compartment 100. Although the shape data of the passenger compartment 100 is not particularly limited. For example, the table T as shown in Fig. 6, that is prepared by determining whether each combination of (r, θ, φ) corresponds to the inside of the passenger compartment 100 or the outside of the passenger compartment 100 in advance, may be used.

Here, Fig. 14 shows the first received signal Sg1, the second received signal Sg2, the third received signal Sg3, and the fourth received signal Sg4 in a case that the in-vehicle living being H and the out-of-vehicle moving object A exist at different positions that are spaced apart from the detection device 1 by the same distance r (= r0) as shown in Fig. 5. As shown in Fig. 14, in the detection device 1, the first received signal Sg1 and the fourth received signal Sg4 are similar to each other. On the other hand, the other three signals are sufficiently different from each other, namely, the first and fourth received signals Sg1, Sg4 are sufficiently different from the second receiving signal Sg2 and the third received signal Sg3. Thus, the detection device 1 substantially obtains the three types of received signals as waveform information used for the analysis of the received signal analyzing part 54.

Here, as a comparative example, Fig. 16 shows the first received signal Sg1, the second received signal Sg2, the third received signal Sg3, and the fourth received signal Sg4 obtained under the same conditions as the conditions of Fig. 7 in a case of using a detection device 1A in which the four antennas 31, 32, 41, 42 are arranged as shown in Fig. 15, for example. As shown in Fig. 16, in the detection device 1A, the first received signal Sg1 and the second received signal Sg2 are similar to each other, and the third received signal Sg3 and the fourth received signal Sg4 are similar to each other. On the other hand, only the first and second received signals Sg1, Sg2 are sufficiently different from the third and fourth received signals Sg3, Sg4. Therefore, the detection device 1A obtains only the two types of received signals as the waveform information used for the analysis of the received signal analyzing part 54.

Thus, according to the detection device 1, it is possible to perform the analysis of the received signal analyzing part 54 with the three types of received signals that is one more than the detection device 1A that is the comparative example. Accuracy of the analysis increases as the number of the types of received signals used for the analysis increases. Thus, according to the detection device 1, it is possible to more accurately estimate the angle of the detected moving object compared to the detection device 1A.

Here, Fig. 17 shows the two-dimensional spectrum indicating the direction of existence of the moving object obtained by the analysis of the detection device 1. Fig. 18 shows a graph indicating a spectrum at the latitude θ = 0 in Fig. 17. Similarly, Fig. 19 shows a two-dimensional spectrum indicating the direction of existence of the moving object obtained by the analysis of the detection device 1A. Fig. 20 shows a graph indicating a spectrum at the latitude θ = 0 in Fig. 19. As is clear from both drawings, peaks are separated into the in-vehicle living being H and the out-of-vehicle moving object in the case of using the detection device 1. On the other hand, peaks are not separated into the in-vehicle living being H and the out-of-vehicle moving object in the case of using the detection device 1A. In view of these drawings, it can be also seen that the accuracy of the analysis is significantly improved when the number of received signals that can be used for the analysis increases from two to three.

In the example shown in Figs. 17 and 18, the received signal analyzing part 54 detects that the moving objects respectively exist at a first position of (r, θ, φ) = (100 cm, 0 deg, -60 deg) and at a second position of (r, θ, φ) = (100 cm, 0 deg, +45 deg). Next, the left-behind determining part 55 determines whether each of the first position and the second position is located in the passenger compartment 100 or outside the passenger compartment 100 based on the table T. In the present embodiment, the first position is located in the passenger compartment 100 and the second position is located outside the passenger compartment 100. Thus, the received signal analyzing part 54 determines that the moving object existing at the first position is the in-vehicle living being H and determines that the moving object existing at the second position is the out-of-vehicle moving object A. According to this determination method, it is possible to accurately identify whether the detected moving object is the in-vehicle living being H or the out-of-vehicle moving object A in a simply manner.

When the left-behind determining part 55 detects the in-vehicle living being H, the warning part 56 performs wirelessly communication with the terminal 9 to notify the terminal 9 that the in-vehicle living being H is detected, namely the in-vehicle living being H is left behind in the passenger compartment 100 for warning the user. With this configuration, it is possible to more reliably warn the user about the existence of the in-vehicle living being H in a simple manner.

The communication with the terminal 9 is performed with the transmitting antenna group 3 and the receiving antenna group 4. Namely, the radio wave is transmitted to the terminal 9 from at least one of the first transmitting antenna 31 and the second transmitting antenna 32, and the radio wave from the terminal 9 is received from at least one of the first receiving antenna 41 and the second receiving antenna 42. As described above, by sharing the transmitting antenna group 3 and the receiving antenna group 4 for detecting the in-vehicle living being H and communicating with the terminal 9, it is possible to simplify the configuration of the detection device 1, thereby reducing the size of the detection device 1.

Although the warning part 56 transmits the warning indicating the existence of the in-vehicle living being H to the terminal 9 of the user in the present embodiment as described above, a method of warning is not limited thereto. For example, a warning may be output to notify people in the vicinity of the vehicle 10 that the in-vehicle living being H exists in the passenger compartment 100. In this case, the warning part 56 can communicate with the vehicle control unit 11 of the vehicle 10 to output the warning by flashing lights of the vehicle 10 or emitting a warning sound with a horn or the like.

The method for detecting the in-vehicle living being H with the detection device 1 has been described. In this regard, the detection device 1 starts the detection for the in-vehicle living being H in response to a specific operation performed on the side of the vehicle 10. The specific operation is not particularly limited. For example, the specific operation may be a timing at which the vehicle 10 is locked, a timing at which the front doors FD1, FD2 or the rear doors RD1, RD2 are opened and closed, a timing at which an engine is stopped, a timing at which a gear is shifted from a driving position to a parking position, a timing at which a parking brake is applied, or a timing at which the vehicle 10 stops. As described above, by using the operation that is caused when the user gets off the vehicle 10, that is, the operation that may possibly lead to the left-behind of the in-vehicle living being H as a trigger for initiating the detection of the detection device 1, it is possible to more reliably detect the in-vehicle living being H left behind in the vehicle 10. Further, it is possible to suppress unnecessary activation of the detection device 1, thereby reducing power consumption thereof.

In this regard, a timing for terminating the detection for the in-vehicle living being H is not particularly limited. For example, the detection may be terminated when a predetermined time has elapsed from the start of the detection. Further, the predetermined time is not particularly limited. For example, the predetermined time may be set to about 5 seconds, 10 seconds, or 20 seconds. By setting the predetermined time to this extent, it is possible to ensure sufficient time for detecting the in-vehicle living being H and prevent a detection period from being excessively long. Thus, it is possible to effectively reduce the power consumption of the detection device 1.

Further, the termination of the detection for the in-vehicle living being H may be triggered when a specific operation is performed on the side of the vehicle 10. The specific operation is not particularly limited. For example, the specific operation may be a timing at which the vehicle 10 is unlocked, a timing at which the front doors FD1, FD2 or the rear doors RD1, RD2 are opened and closed, a timing at which the engine is activated, a timing at which the gear is shifted from the parking position to the driving position or the like, a timing at which the parking brake is released, or a timing at which the vehicle 10 starts to move. As described above, by using the operation caused when the user gets on the vehicle 10, that is the operation that may possibly resolve the left-behind of the in-vehicle living being H as the trigger for terminating the detection of the detection device 1, it is possible to suppress unnecessary detection of the detection device 1 and effectively reduce the power consumption of the detection device 1.

The configuration of the detection device 1 has been described. Next, description will be given to a detection method for the in-vehicle living being H with the detection device 1. As shown in Fig. 21, the detection method for the in-vehicle living being H with the detection device 1 has a received signal obtaining step S1 for obtaining the first received signal Sg1, the second received signal Sg2, the third received signal Sg3, and the fourth received signal Sg4, and a detecting step S2 for detecting the in-vehicle living being H with the first received signal Sg1, the second received signal Sg2, the third received signal Sg3, and the fourth received signal Sg4. The following description will be given to these steps S1, S2 in turn.

### <Received signal obtaining step S1>

As shown in Fig. 21, the received signal obtaining step S1 has a detection start determining step S11 for determining whether the detection for the in-vehicle living being H should be started, a radio wave transmitting and receiving step S12 for transmitting and receiving the radio waves with changing the combination of the first and second transmitting antennas 31, 32 and the first and second receiving antennas 41, 42, and a received signal generating step S13 for processing the received reflected waves to generate the first received signal Sg1, the second received signal Sg2, the third received signal Sg3, and the fourth received signal Sg4.

In the detection start determining step S11, the control unit 5 performs the communication with the vehicle control unit 11 to determine whether the specific operation is performed on the vehicle 10. If the specific operation is performed on the vehicle 10, the control unit 5 proceeds to the radio wave transmitting and receiving step S12.

In the radio wave transmitting and receiving step S12, the control unit 5 transmits and receives the radio waves with changing the combination of the first and second transmitting antennas 31, 32 and the first and second receiving antennas 41, 42. Namely, the control unit 5 transmits and receives the radio waves with periodically switching among the first receiving state that the radio wave is transmitted from the first transmitting antenna 31 and the reflected wave thereof is received by the first receiving antenna 41, the second receiving state that the radio wave is transmitted from the first transmitting antenna 31 and the reflected wave thereof is received by the second receiving antenna 42, the third receiving state that the radio wave is transmitted from the second transmitting antenna 32 and the reflected wave thereof is received by the first receiving antenna 41, and the fourth receiving state that the radio wave is transmitted from the second transmitting antenna 32 and the reflected wave thereof is received by the second receiving antenna 42.

In the received signal generating step S13, the control unit 5 first splits the received reflected wave and feeds them into the multiplier 57b and the orthogonal multiplier 57c. Then, in the receiving part 52, the in-phase component signal SgA that exhibits the time response characteristic based on the pulse signal transmitted from the transmitting part 51 and the quadrature phase component signal SgB that exhibits the time response characteristic based on the signal orthogonal to the pulse signal transmitted from the transmitting part 51 are derived. As a result, it is possible to obtain the received signal Sg containing the in-phase component signal SgA and the quadrature phase component signal SgB.

Next, in the received signal holding part 53, the control unit 5 categorizes the received signal Sg derived by the receiving part 52 into the first received signal Sg1 obtained in the first receiving state, the second received signal Sg2 obtained in the second receiving state, the third received signal Sg3 obtained in the third receiving state, and the fourth received signal Sg4 obtained in the fourth receiving state based on the timing at which the transmitting part 51 generates the pulse signal and the switching timings of the RF switches 58a, 58b and holds them. Accordingly, the first received signal Sg1, the second received signal Sg2, the third received signal Sg3, and the fourth received signal Sg4 are generated.

### <Detecting step S2>

As a step S21 of the detecting step S2, in the received signal holding part 53, the control unit 5 first generates and holds the first received signal time series Sg1t in which the first received signals Sg1 repeatedly obtained at the predetermined cycle are arranged in chronological order, the second received signal time series Sg2t in which the second received signals Sg2 repeatedly obtained at the predetermined cycle are arranged in chronological order, the third received signal time series Sg3t in which the third received signals Sg3 repeatedly obtained at the predetermined cycle are arranged in chronological order, and the fourth received signal time series Sg4t in which the fourth received signals Sg4 repeatedly obtained at the predetermined cycle are arranged in chronological order.

Next, as a step S22, the control unit 5 calculates an electric power value of a variable component of the amplitude of the reflected wave based on the first, second, third, and fourth received signal time series Sg1t, Sg2t, Sg3t, Sg4t to determine whether the calculated electrical power value is equal to or more than a predetermined threshold value. If the calculated electric power value is equal to or more than the threshold value, the control unit 5 determines that the moving object exists in the detection area and starts the detection for the position of the moving object. According to this method, for example, it is possible to substantially ignore slight variations in the electric power value caused by signal noise or the like, thereby suppressing the unnecessary detection of the detection device 1.

In the detection for the position of the moving object, as a step S23, the control unit 5 first uses one of the first, second, third, and fourth received signal time series Sg1t, Sg2t, Sg3t, or Sg4t to detect the distance r from the detection device 1 to the moving object in the received signal analyzing part 54. Further, as a step S24, the control unit 5 analyzes the first, second, third, and fourth received signal time series Sg1t, Sg2t, Sg3t, Sg4t with the MUSIC method to detect the direction in which the moving object exists, that is the angle (the longitude φ and the latitude θ) in which the moving object exists in the received signal analyzing part 54. Then, as a step S25, the control unit 5 detects the position of the moving object based on the distance r, the longitude φ, and the latitude θ in the received signal analyzing part 54. In this regard, this order of the steps S23, S24 is not particularly limited.

Next, as a step S26, the control unit 5 compares the position of the moving object detected by the received signal analyzing part 54 with the table T to determine whether the detected moving object is the in-vehicle living being H located in the passenger compartment 100 or the out-of-vehicle moving object A located outside the passenger compartment 100 in the left-behind determining part 55. If the moving object is determined to be the in-vehicle living being H, the control unit 5 wirelessly communicates with the terminal 9 in the warning part 56 as a step S27 to notify the terminal 9 that the in-vehicle living being H exists for warning the user.

The detection method has been described. According to the above-described detection method, the four antennas 31, 32, 41, 42 are arranged so that the first imaginary straight line L1 intersects with the second imaginary straight line L2 and each of the first imaginary straight line L1 and the second imaginary straight line L2 is inclined with respect to the first direction X of the passenger compartment 100 at the angle that is less than 90 degrees. Thus, it is possible to improve both of the angular resolution with respect to the first direction X and the angular resolution with respect to the second direction Y without excessively increasing the number of antennas. Therefore, it is possible to accurately detect the in-vehicle living being H without being affected by the out-of-vehicle moving object A detected through the front glass GL1, the rear glass GL2, and the rear door glasses GL5, GL6.

Each of the detection device 1, the detection method, and the vehicle 10 has been described. As described above, the detection device 1 is configured to detect the in-vehicle living being H that is the detection target existing in the passenger compartment 100 of the vehicle 10. The detection device 1 has the first transmitting antenna 31 and the second transmitting antenna 32 for transmitting the radio waves, and the first receiving antenna 41 and the second receiving antenna 42 for receiving the reflected waves generated when the radio waves are reflected by the object. Further, the detection device 1 is arranged in the passenger compartment 100 so that the first imaginary straight line L1 connecting the first transmitting antenna 31 and the second transmitting antenna 32 intersects with the second imaginary straight line L2 connecting the first receiving antenna 41 and the second receiving antenna 42 and at least one of the first imaginary straight line L1 and the second imaginary straight line L2 is inclined with respect to the first direction X of the passenger compartment 100 at the angle that is less than 90 degrees in the plan view of the vehicle 10. Further, the detection device 1 uses the reflected waves to detect the in-vehicle living being H. With this configuration, it is possible to improve the angular resolution with respect to the first direction X, thereby enhancing the accuracy of the detection for the in-vehicle living being H. Further, it is also possible to suppress the increase in the number of antennas, thereby reducing the cost and the size of the device. Thus, it is possible to provide the detection device 1 that can accurately detect the in-vehicle living being H and whose cost and size is reduced.

Further, as described above, the in-vehicle living being H is detected by using the first received signal Sg1 obtained when the first receiving antenna 41 receives the reflected wave of the radio wave transmitted from the first transmitting antenna 31, the second received signal Sg2 obtained when the second receiving antenna 42 receives the reflected wave of the radio wave transmitted from the first transmitting antenna 31, the third received signal Sg3 obtained when the first receiving antenna 41 receives the reflected wave of the radio wave transmitted from the second transmitting antenna 32, and the fourth received signal Sg4 obtained when the second receiving antenna 42 receives the reflected wave of the radio wave transmitted from the second transmitting antenna 32. According to the detection device 1, waveform differences are likely to occur among the first received signal Sg1, the second received signal Sg2, the third received signal Sg3, and the fourth received signal Sg4 due to the arrangements of the four antennas 31, 32, 41, 42. Thus, with this configuration, it is possible to improve the angular resolution with respect to the first direction X, thereby accurately detecting the in-vehicle living being H.

Further, as described above, the vehicle 10 has the rear door glasses GL5, GL6 that serve as the windows located on at least one side of the first direction X (in the present embodiment, on both sides of the first direction X). With this configuration, there is a case that the detection device 1 detects not only the in-vehicle living being H but also the out-of-vehicle moving object A located outside the passenger compartment 100 through the rear door glasses GL5, GL6. However, even in this case, it is possible to accurately distinguish between the in-vehicle living being H and the out-of-vehicle moving object A because the angular resolution with respect to the first direction X is high. Thus, it is possible to accurately detect the in-vehicle living being H.

Further, the first direction X is the horizontal direction of the vehicle 10 as described above. Since the rear door glasses GL5, GL6 are arranged along the horizontal direction of the vehicle 10, it is possible to accurately distinguish between the in-vehicle living being H and the out-of-vehicle moving object A detected through the rear door glasses GL5, GL6 by setting the horizontal direction as the first direction X. Thus, it is possible to accurately detect the in-vehicle living being H.

Further, as described above, the detection device 1 is arranged so that each of the first imaginary straight line L1 and the second imaginary straight line L2 is inclined with respect to both of the first direction X and the second direction Y, that intersects with the first direction X, at the angle that is less than 90 degrees in the plan view of the vehicle 10. With this configuration, it is possible to improve the angular resolution with respect to the second direction Y in addition to the angular resolution with respect to the first direction X.

Further, as described above, the vehicle 10 has the front glass GL1 and the rear glass GL2 that serve as the windows located on at least one side of the second direction Y (in the present embodiment, on both sides of the second direction Y). With this configuration, there is a case that the detection device 1 detects not only the in-vehicle living being H but also the out-of-vehicle moving object A existing outside the passenger compartment 100 through the front glass GL1 and the rear glass GL2. However, even in this case, it is possible to accurately distinguish between the in-vehicle living being H and the out-of-vehicle moving object A because the angular resolution with respect to the second direction Y is high. Thus, it is possible to accurately detect the in-vehicle living being H.

Further, the second direction Y is the front and rear direction of the vehicle 10 as described above. Since the front glass GL1 and the rear glass GL2 are arranged along the front and rear direction of the vehicle 10, it is possible to accurately distinguish between the in-vehicle living being H and the out-of-vehicle moving object A detected through the front glass GL1 or the rear glass GL2 by setting the front and rear direction as the second direction Y. Thus, it is possible to accurately detect the in-vehicle living being H.

Further, as described above, the distance r to the moving object located inside or outside the passenger compartment 100 and the angle (the longitude φ and the latitude θ) indicating the direction of existence of the moving object are detected based on the first received signal Sg1, the second received signal Sg2, the third received signal Sg3, and the fourth received signal Sg4. Further, it is determined whether the moving object is the in-vehicle living being H based on the distance r, the angle and the shape of the passenger compartment 100. According to this method, it is possible to distinguish between the in-vehicle living being H and the out-of-vehicle moving object A in a simple manner.

Further, as described above, the detection device 1 communicates with the terminal 9 or the vehicles 10 that is the external device with at least one of the first transmitting antenna 31 and the second transmitting antenna 32 and at least one of the first receiving antenna 41 and the second receiving antenna 42. With this configuration, the first transmitting antenna 31, the second transmitting antenna 32, the first receiving antenna 41, and the second receiving antenna 42 can be shared for both of the detection for the in-vehicle living being H and the communicating with the terminal 9 or the vehicle 10. Thus, it is possible to simplify the configuration of the detection device 1, thereby reducing the size of the detection device 1.

Further, as described above, the detection method is used for detecting the in-vehicle living being H that is the detection target existing in the passenger compartment 100 of the vehicle 10. The detection method contains the step of arranging the detection device 1 in the passenger compartment 100, wherein the detection device 1 has the first transmitting antenna 31 and the second transmitting antenna 32 that transmit the radio waves, and the first receiving antenna 41 and the second receiving antenna 42 that receive the reflected waves generated when the radio waves are reflected by the object, so that the first imaginary straight line L1 connecting the first transmitting antenna 31 and the second transmitting antenna 32 intersects with the second imaginary straight line L2 connecting the first receiving antenna 41 and the second receiving antenna 42 and at least one of the first imaginary straight line L1 and the second imaginary straight line L2 is inclined with respect to the first direction X of the passenger compartment 100 at the angle that is less than 90 degrees in the plan view of the vehicle 10, and using the reflected waves to detect the in-vehicle living being H. According to this method, it is possible to improve the angular resolution with respect to the first direction X, thereby enhancing the accuracy of the detection for the in-vehicle living being H. Further, since the detection device 1 whose size and cost is reduced and in which the number of antennas is suppressed can be used, the detection method can be easily implemented.

Further, the vehicle 10 includes the detection device 1 for detecting the in-vehicle living being H that is the detection target existing in the passenger compartment 100 as described above. Further, the detection device 1 has the first transmitting antenna 31 and the second transmitting antenna 32 for transmitting the radio waves, and the first receiving antenna 41 and the second receiving antenna 42 for receiving the reflected waves generated when the radio waves are reflected by the object. Further, the detection device 1 is arranged in the passenger compartment 100 so that the first imaginary straight line L1 connecting the first transmitting antenna 31 and the second transmitting antenna 32 intersects with the second imaginary straight line L2 connecting the first receiving antenna 41 and the second receiving antenna 42 and at least one of the first imaginary straight line L1 and the second imaginary straight line L2 is inclined with respect to the first direction X of the passenger compartment 100 at the angle that is less than 90 degrees in the plan view of the vehicle 10. The detection device 1 uses the reflected waves to detect the in-vehicle living being H. With this configuration, it is possible to improve the angular resolution of the detection device 1 with respect to the first direction X, thereby enhancing the accuracy of the detection for the in-vehicle living being H. Further, since the detection device 1 whose size and cost is reduced and in which the number of antennas is suppressed can be used, it is possible to suppress the increase in the cost of the vehicle 10 and easily arrange the detection device 1 in the passenger compartment 100.

### <Second embodiment>

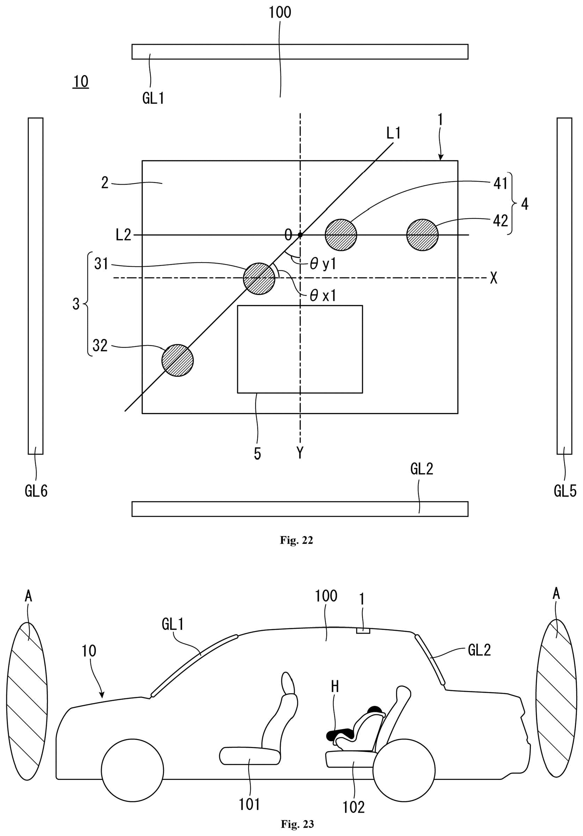

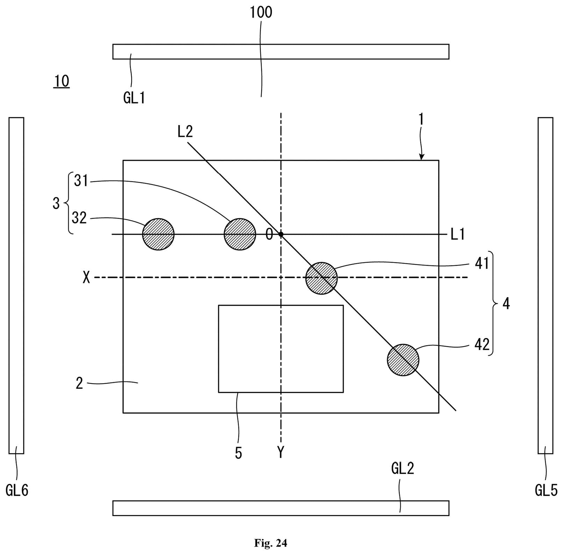

Fig. 22 is a plan view showing a detection device according to the second embodiment. Fig. 23 is a schematic view showing an example of the vehicle. Fig. 24 is a plan view showing a modified example of the detection device shown in Fig. 22.

A detection device 1 of the present embodiment has the same configuration as the configuration of the detection device 1 of the above-described first embodiment except that the configuration of the receiving antenna group 4, specifically the direction of the second imaginary straight line L2 is changed. Thus, the following description primarily focuses on differences between the above-described first embodiment and the present embodiment, and description for the same matters will be omitted. Further, in each drawing for the present embodiment, the identical reference numerals are used for components identical to the components of the above-described embodiment.

As shown in Fig. 22, in the detection device 1 of the present embodiment, the first imaginary straight line L1 connecting the first transmitting antenna 31 and the second transmitting antenna 32 is inclined with respect to the first direction X at the angle θx1 that is less than 90 degrees and is inclined with respect to the second direction Y at the angle θy1 that is less than 90 degrees similar to the above-described first embodiment. In contrast, the second imaginary straight line L2 connecting the first receiving antenna 41 and the second receiving antenna 42 is aligned with the first direction X. Namely, the second imaginary straight line L2 is parallel to the first direction X. By arranging the four antennas 31, 32, 41, 42 in this manner, although the angular resolution with respect to the second direction Y decreases compared to the above-described first embodiment, it is possible to further improve the angular resolution with respect to the first direction X.

For example, in a typical sedan-type vehicle as shown in Fig. 23, an engine compartment and a trunk compartment are respectively arranged at the front side and the rear side of the passenger compartment 100. In this case, areas in which the out-of-vehicle moving object A may possibly exist are sufficiently distant from the area in which the in-vehicle living being H may possibly exist, that is the passenger compartment 100. In other words, a shortest distance from the detection device 1 to the out-of-vehicle moving object A in the second direction Y is sufficiently longer than a longest distance from the detection device 1 to the in-vehicle living being H in the second direction Y. In this case, for the second direction Y, it is possible to detect the in-vehicle living being H without being affected by the out-of-vehicle moving object A by using only the distance r. Thus, the high angular resolution with respect to the second direction Y is not required. Therefore, by increasing the angular resolution with respect to the first direction X like the present embodiment, it becomes possible to more accurately detect the in-vehicle living being H.

Although the first imaginary straight line L1 is inclined with respect to the first direction X and the second imaginary straight line L2 is aligned with the first direction X in the present embodiment as described above, the present invention is not limited thereto. For example, as shown in Fig. 24, the first imaginary straight line L1 may be aligned with the first direction X and the second imaginary straight line L2 may be inclined with respect to the first direction X. According to this configuration, it is also possible to achieve the same effect as the effect of the present embodiment.

As described above, the detection device 1 of the present embodiment is arranged so that one of the first imaginary straight line L1 and the second imaginary straight line L2 is inclined with respect to the first direction X at the angle that is less than 90 degrees and another one of the first imaginary straight line L1 and the second imaginary straight line L2 is aligned with the first direction X. With this configuration, it is possible to further improve the angular resolution with respect to the first direction X.

According to the above-described second embodiment, it is also possible to achieve the same effects as the effects of the above-described first embodiment.

Although the detection device, the detection method, and the vehicle of the present invention have been described based on the illustrated embodiments, the present invention is not limited thereto. The configuration of each component may be replaced with any configuration or step having similar functions. Further, other arbitrary components or steps may be added to the present invention.

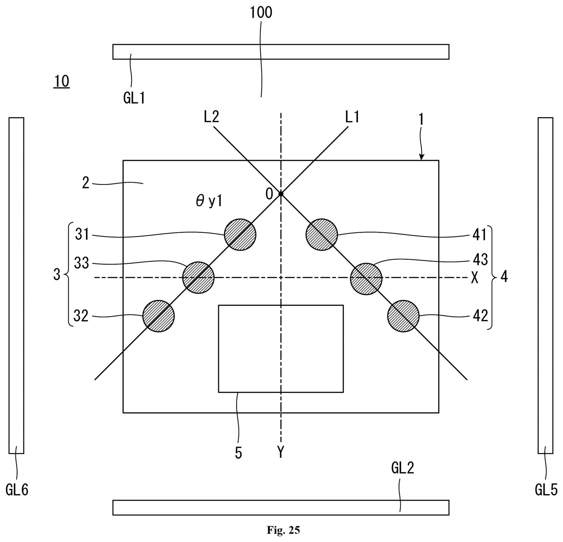

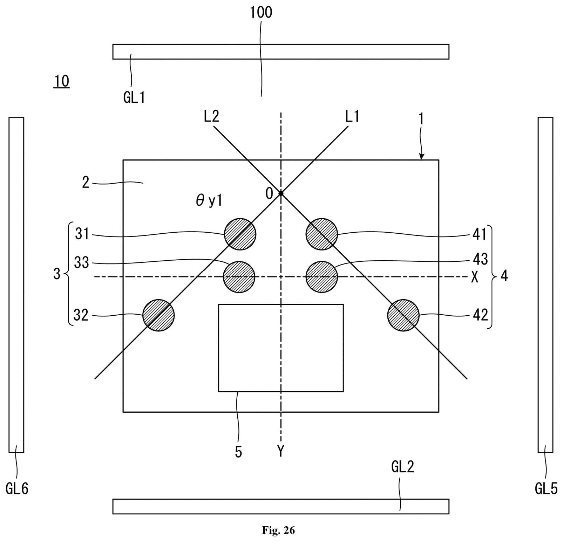

Furthermore, although the transmitting antenna group 3 includes the two transmitting antennas 31, 32 in the above-described embodiments, the number of transmitting antennas may be three or more. Similarly, although the receiving antenna group 4 includes the two receiving antennas 41, 42, the number of receiving antennas may be three or more. In other words, for example, as shown in Fig. 25, the transmitting antenna group 3 may include the first transmitting antenna 31, the second transmitting antenna 32, and a third transmitting antenna 33, and the receiving antenna group 4 may include the first receiving antenna 41, the second receiving antenna 42, and a third receiving antenna 43. In this regard, although the third transmitting antenna 33 is located on the first imaginary straight line L1 and the third receiving antenna 43 is located on the second imaginary straight line L2 in Fig. 25, the present invention is not limited thereto. For example, as shown in Fig. 26, the third transmitting antenna 33 may be positioned so as to offset from the first imaginary straight line L1 and the third receiving antenna 43 may be positioned so as to offset from the second imaginary straight line L2. In this regard, although Figs. 25 and 26 show the modified examples of the detection device shown in Fig. 3, the same description can be applied to the detection devices shown in Figs. 8, 9, 15, 22, 24.

### INDUSTRIAL APPLICABILITY

The detection device of the present invention is arranged in the passenger compartment so that the first imaginary straight line connecting the first transmitting antenna and the second transmitting antenna intersects with the second imaginary straight line connecting the first receiving antenna and the second receiving antenna and at least one of the first imaginary straight line and the second imaginary straight line is inclined with respect to the first direction of the passenger compartment at the angle that is less than 90 degrees in the plan view of the vehicle. By arranging the four antennas as described above, it is possible to suppress the number of antennas and improve an angular resolution with respect to the first direction. Thus, it is possible to provide the detection device whose cost and size are reduced and that can accurately detect the detection target. Further, the detection method of the present invention contains using the reflected waves, that are obtained by the detection device arranged in the passenger compartment so that the first imaginary straight line connecting the first transmitting antenna and the second transmitting antenna intersects with the second imaginary straight line connecting the first receiving antenna and the second receiving antenna and at least one of the first imaginary straight line and the second imaginary straight line is inclined with respect to the first direction of the passenger compartment at the angle that is less than 90 degrees in the plan view of the vehicle, to detect the detection target. Thus, the angular resolution with respect to the first direction can be improved, and thereby it is possible to accurately detect the detection target. Accordingly, the present invention has industrial applicability.

## Claims

1. A detection device for detecting a detection target existing in a passenger compartment of a vehicle, comprising:
a first transmitting antenna and a second transmitting antenna for transmitting radio waves; and
a first receiving antenna and a second receiving antenna for receiving reflected waves generated when the radio waves are reflected by an object,
wherein the detection device is arranged in the passenger compartment so that:
a first imaginary straight line connecting the first transmitting antenna and the second transmitting antenna intersects with a second imaginary straight line connecting the first receiving antenna and the second receiving antenna in a plan view of the vehicle, and
at least one of the first imaginary straight line and the second imaginary straight line is inclined with respect to a first direction of the passenger compartment at an angle that is less than 90 degrees in the plan view of the vehicle, and
wherein the detection device uses the reflected waves to detect the detection target.

2. The detection device as claimed in claim 1, wherein the detection target is detected by using:
a first received signal obtained when the first receiving antenna receives the reflected wave of the radio wave transmitted from the first transmitting antenna, and
a second received signal obtained when the second receiving antenna receives the reflected wave of the radio wave transmitted from the first transmitting antenna,
a third received signal obtained when the first receiving antenna receives the reflected wave of the radio wave transmitted from the second transmitting antenna, and
a fourth received signal obtained when the second receiving antenna receives the reflected wave of the radio wave transmitted from the second transmitting antenna.

3. The detection device as claimed in claim 1, wherein the vehicle has a window located on at least one side of the first direction.

4. The detection device as claimed in claim 3, wherein the first direction is a horizontal direction of the vehicle.

5. The detection device as claimed in claim 1, wherein the detection device is arranged so that each of the first imaginary straight line and the second imaginary straight line is inclined with respect to both of the first direction and a second direction that intersects with the first direction at an angle that is less than 90 degrees in the plan view of the vehicle.

6. The detection device as claimed in claim 5, wherein the vehicle has a window located on at least one side of the second direction.

7. The detection device as claimed in claim 6, wherein the second direction is a front and rear direction of the vehicle.

8. The detection device as claimed in claim 1, wherein the detection device is arranged so that one of the first imaginary straight line and the second imaginary straight line is inclined with respect to the first direction at an angle that is less than 90 degrees and another one of the first imaginary straight line and the second imaginary straight line is aligned with the first direction.

9. The detection device as claimed in claim 2, wherein the detection device detects a distance to a moving object located inside or outside the passenger compartment and a direction of existence of the moving object based on the first received signal, the second received signal, the third received signal, and the fourth received signal, and
wherein the detection device determines whether the moving object is the detection target based on the distance, the direction of existence, and a shape of the passenger compartment.

10. The detection device as claimed in claim 1, wherein the detection device performs communication with an external device with at least one of the first transmitting antenna and the second transmitting antenna and at least one of the first receiving antenna and the second receiving antenna.

11. A detection method for detecting a detection target existing in a passenger compartment of a vehicle, comprising:
arranging a detection device, that has a first transmitting antenna and a second transmitting antenna for transmitting radio waves, and a first receiving antenna and a second receiving antenna for receiving reflected waves generated when the radio waves are reflected by an object, in the passenger compartment so that:
a first imaginary straight line connecting the first transmitting antenna and the second transmitting antenna intersects with a second imaginary straight line connecting the first receiving antenna and the second receiving antenna in a plan view of the vehicle, and
at least one of the first imaginary straight line and the second imaginary straight line is inclined with respect to a first direction of the passenger compartment at an angle that is less than 90 degrees in the plan view of the vehicle, and
using the reflected waves to detect the detection target.

12. A vehicle comprising a detection device for detecting a detection target existing in a passenger compartment,
wherein the detection device has:
a first transmitting antenna and a second transmitting antenna for transmitting radio waves, and
a first receiving antenna and a second receiving antenna for receiving reflected waves generated when the radio waves are reflected by an object,
wherein the detection device is arranged in the passenger compartment so that:
a first imaginary straight line connecting the first transmitting antenna and the second transmitting antenna intersects with a second imaginary straight line connecting the first receiving antenna and the second receiving antenna in a plan view of the vehicle, and
at least one of the first imaginary straight line and the second imaginary straight line is inclined with respect to a first direction of the passenger compartment at an angle that is less than 90 degrees in the plan view of the vehicle, and
wherein the detection device uses the reflected waves to detect the detection target.
